# EUROPÄISCHE PATENTSCHRIFT

(11) **EP 4 068 598 B1**
(45) Veröffentlichungstag und Bekanntmachung des Hinweises auf die Patenterteilung: **09.09.2026**
(21) Anmeldenummer: 21305413.3
(22) Anmeldetag: 31.03.2021
(51) Int. Cl.: H02K 41/03, B65G 54/02

(54) **LINEARMOTORSYSTEM**
LINEAR MOTOR SYSTEM
SYSTÈME DE MOTEUR LINÉAIRE

(43) Veröffentlichungstag der Anmeldung: 05.10.2022
(73) Patentinhaber: Schneider Electric Industries SAS, 92500 Rueil-Malmaison (FR)
(72) Erfinder: Groß, André, 97084 Würzburg (DE); Müllerschön, Volker, 97204 Höchberg (DE); Ohnemus, Stefan, 77978 Schuttertal (DE); Rothaug, Andreas, 97839 Esselbach (DE); Waldschmitt, Achim, 63933 Mönchberg (DE); Bunsendal, Jens, 97070 Würzburg (DE)
(74) Vertreter: Manitz Finsterwald Patent- und Rechtsanwaltspartnerschaft mbB

(56) Entgegenhaltungen:
- NL-A- 8 401 073
- US-A1- 2014 257 554

## Beschreibung

Die vorliegende Erfindung betrifft ein Linearmotorsystem, insbesondere Transportsystem, z.B. Multicarrier, mit wenigstens einem Läufer, mit einer mehrere Segmente umfassenden Führungsbahn für den Läufer, einer an der Führungsbahn angeordneten Führungsschiene und einem an dem Läufer angeordneten Führungselement, wobei die Führungsschiene und das Führungselement zur Führung des Läufers an der Führungsbahn zusammenwirken, wobei am Läufer ein Magnet und an der Führungsbahn ein Magnet zum Antrieb des Läufers entlang der Führungsbahn und/oder zum Halten des Läufers an der Führungsbahn vorgesehen sind, wobei eine y-Richtung parallel zu einem Abstand zwischen den Magneten verläuft und senkrecht zur y-Richtung eine z-Richtung definiert ist, und wobei die Führungsbahn eine Anlagefläche umfasst, an der die Führungsschiene anliegt, und wobei eine Normale der Anlagefläche zumindest mit einer Komponente parallel zur y-Richtung verläuft.

Linearmotoren sind heute weit verbreitet. Sie können zum Beispiel dazu eingesetzt werden, Produkte in Industrieanlagen zu bewegen, insbesondere zu transportieren. Zum flexiblen Transport von verschiedensten Produkten sind Multicarrier besonders vorteilhaft. Diese umfassen insbesondere eine Mehrzahl an Läufern, also Transporteinheiten, die einzeln und unabhängig voneinander bewegbar sind. In einem typischen Multicarrier-System ist die Führungsbahn in sich geschlossen, also praktisch endlos, was einen Umlaufbetrieb ermöglicht. Es existieren aber beispielsweise auch "offene" Systeme, also Systeme ohne Umlaufbetrieb und mit definierten Bahnenden.

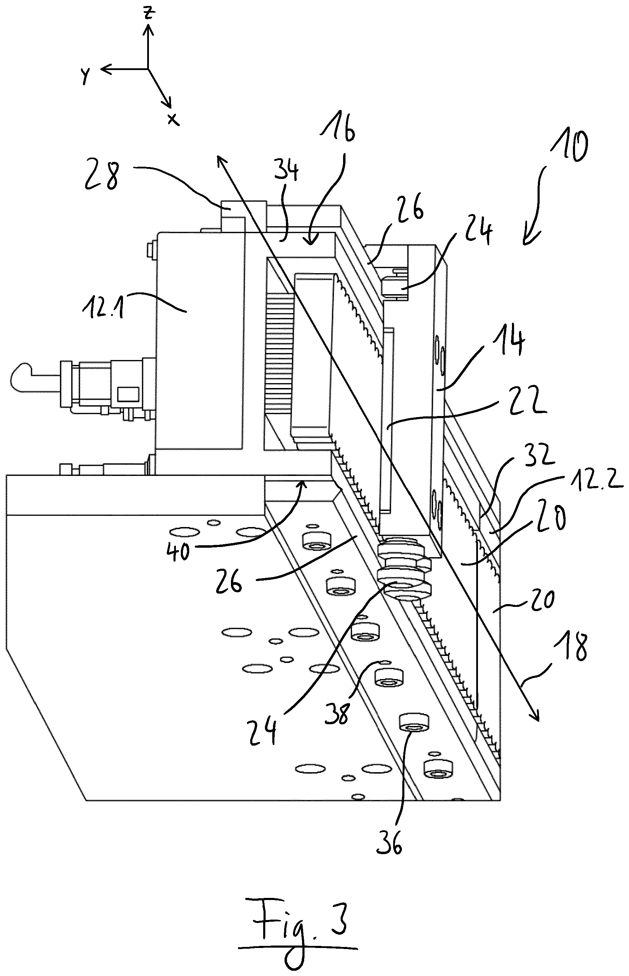

Bei einem bekannten Linearmotorsystem der eingangs genannten Art sind Führungsschienen an der Führungsbahn von oben bzw. von unten befestigt. Eine solche Befestigung ist z.B. in Fig. 3 zu sehen, welche unten noch näher beschrieben wird. Dort liegt die jeweilige Führungsschiene an einer Anlagefläche der Führungsbahn an, wobei die Normale der Anlagefläche nach unten bzw. oben zeigt. Im in Fig. 3 eingezeichneten Koordinatensystem verläuft die Normale senkrecht zur y-Richtung und parallel zur z-Richtung. Die Führungsschiene wird in einer Befestigungsrichtung parallel zu einer z-Richtung an der Führungsbahn befestigt. Dabei ist typischerweise eine Ausrichtung der Führungsschiene in y-Richtung notwendig, damit der Abstand zwischen den Magneten des Läufers und den Magneten der Führungsbahn einem vorgegebenen Wert entspricht. Diese Ausrichtung erfolgt beispielsweise durch Zylinderstifte, die ebenfalls in z-Richtung eingebracht werden.

US 2014/0257554 A1 offenbart einen Linearförderer, der aus mehreren mit Magneten versehenen Segmenten besteht, an denen eine Schiene für Gleiter angebracht ist, die ebenfalls mit Magneten versehen sind. Die Schiene liegt an einer Anlagefläche des Segments an, wobei sich eine Normale dieser Anlagefläche parallel zu einer Abstandsrichtung zwischen den Magneten der Segmente und den Magneten des Gleiters erstreckt. Ein weiterer Linearförderer ist beispielsweise aus NL 8401073 A bekannt.

Es ist eine Aufgabe der Erfindung, in einem Linearmotorsystem der eingangs genannten Art die Montage und/oder Demontage der Führungsschiene an bzw. von der Führungsbahn zu vereinfachen. Es ist eine weitere Aufgabe der Erfindung, die Wartung eines Linearmotorsystems der eingangs genannten Art zu vereinfachen.

Diese Aufgaben werden durch ein Linearmotorsystem gemäß Anspruch 1 gelöst, insbesondere dadurch, dass ein Element eines Segments der Führungsbahn, an welchem Element die Führungsschiene und der Magnet der Führungsbahn befestigt sind, und/oder ein Segment der Führungsbahn einschließlich des Magneten zumindest im Wesentlichen parallel zur z-Richtung zugänglich und entnehmbar ist, während die Führungsschiene an weiteren Segmenten befestigt bleibt.

Durch diese Ausrichtung der Anlagefläche, an der die Führungsschiene anliegt, ist eine Ausrichtung in y-Richtung gewissermaßen automatisch gegeben. Es ist insbesondere keine zusätzliche Ausrichtung der Führungsschiene in Bezug auf die y-Richtung, wie etwa durch Zylinderstifte, nötig. Dies erleichtert Montage und Demontage der Führungsschiene sowie die Wartung des Linearmotorsystems. Die Anlagefläche kann also die Position des Läufers in y-Richtung definieren. Eine Ausrichtung der Führungsschiene in z-Richtung ist je nach Ausgestaltung des Läufers womöglich noch nicht einmal nötig.

Die Ausrichtung durch die Anlagefläche hat außerdem den Vorteil, dass eine Toleranzkette in Bezug auf die y-Positionierung des Läufermagneten relativ zur

Führungsbahn und in Bezug auf den Abstand zwischen den Magneten kurz ist.

Der vorgegebene Abstand der Magneten zueinander lässt sich somit auf einfache Weise besonders genau einhalten.

Die y-Richtung ist anspruchsgemäß als parallel zum Abstand zwischen den Magneten definiert. Eine Anziehungskraft zwischen den Magneten kann insbesondere ebenfalls parallel zur y-Richtung bzw. zum Abstand wirksam sein. Dabei wirkt die Anziehungskraft insbesondere derart, dass durch die Anziehungskraft über den Läufer und über die Führungsschiene eine Kraft gegen die Anlagefläche, an der die Führungsschiene anliegt, ausgeübt wird.

Die Normale der Anlagefläche verläuft zumindest mit einer Komponente parallel zur y-Richtung. Dies bedeutet, dass eine y-Komponente der Normalen größer als Null ist. Die Anlagefläche kann somit beispielsweise schräg in Bezug auf die y-Richtung verlaufen oder bevorzugt zumindest im Wesentlichen senkrecht zur y-Richtung. Auch eine schräge Anlagefläche unterstützt grundsätzlich eine Ausrichtung der Führungsschiene in y-Richtung.

Die Anlagefläche kann bevorzugt eben sein. Grundsätzlich muss die Anlagefläche aber nicht eben sein. Beispielsweise kann die Anlagefläche eine V-förmige Nut umfassen, wodurch beispielsweise eine automatische Ausrichtung der Führungsschiene in einer zur y-Richtung senkrechten Richtung, typischerweise in z-Richtung, erreicht werden kann.

Die Führungsschiene kann bevorzugt an einer Außenfläche der Führungsbahn befestigt sein, die dem Läufer und/oder dem Läufermagneten zugewandt ist. Eine solche Außenfläche kann auch als "Vorderseite" der Führungsbahn bezeichnet werden, weil sie im Betrieb häufig einem Bediener oder einem zu bewegenden Produkt zugewandt ist. Die Außenfläche kann durch die Anlagefläche gebildet sein.

Die Führungsschiene kann beispielsweise in y-Richtung zwischen der Anlagefläche und einem zugeordneten Führungselement des Läufers angeordnet sein. Bevorzugt kann die Führungsschiene ausschließlich auf einer dem Führungselement zugewandten Seite der Anlagefläche der Führungsbahn angeordnet sein.

Die Führungsschiene ist grundsätzlich ein separates Bauteil, welches insbesondere lösbar an einem Element oder Bauteil der Führungsbahn befestigt sein kann, beispielsweise durch eine Schraubverbindung.

Senkrecht zur y-Richtung ist eine z-Richtung definiert. Senkrecht zur y-Richtung und senkrecht zur z-Richtung kann eine x-Richtung definiert sein. Die x-Richtung kann bevorzugt einer Führungsrichtung entsprechen, entlang derer der Läufer geführt beweglich ist, oder parallel zu dieser verlaufen.

Eine Führungsschiene ist grundsätzlich in Kooperation mit dem Führungselement in Bezug auf die y-Richtung begrenzend wirksam. Zusätzlich kann eine Führungsschiene in Kooperation mit dem Führungselement in Bezug auf die z-Richtung begrenzend wirksam sein. Bevorzugt ist die Führungsschiene in Kooperation mit dem Führungselement aber nicht in x-Richtung begrenzend wirksam. Es können beispielsweise mehrere Führungsschienen und korrespondierende Führungselemente vorgesehen sein. Bevorzugt ist an der Führungsbahn eine entsprechende Anzahl an Anlageflächen für die Führungsschienen vorgesehen. Bei einer bevorzugten Ausführungsform sind zwei Führungsschienen vorgesehen. Dies bezieht sich insbesondere auf einen gegebenen Querschnitt in der yz-Ebene. Die zwei Führungsschienen können bevorzugt zu zwei Seiten des Magneten der Führungsbahn verlaufen, z.B. in z-Richtung oberhalb und unterhalb. Unabhängig von der Zahl der Führungsschienen in Bezug auf den Querschnitt in yz-Ebene kann eine jeweilige Führungsschiene grundsätzlich auch mehrere Führungsschienenabschnitte umfassen, wie es unten noch näher erläutert wird.

Bei einer bevorzugten Ausführungsform ist eine y-Komponente der Normalen der Anlagefläche größer als Komponenten der Normalen in zur y-Richtung senkrechten Richtungen. Mit anderen Worten: Die Normale verläuft bevorzugt überwiegend in y-Richtung. Dies verbessert die Ausrichtfunktion der Anlagefläche. Insoweit hierin davon die Rede ist, dass eine Achse oder Richtung zumindest mit einer Komponente in y-Richtung verläuft, gilt dieser Absatz entsprechend, d.h. es kann auch vorgesehen sein, dass die Achse bzw. Richtung überwiegend in y-Richtung verläuft.

Besonders bevorzugt ist es, wenn die Normale der Anlagefläche zumindest im Wesentlichen parallel zur y-Richtung ist. Dies verbessert die Ausrichtfunktion der Anlagefläche weiter. Insoweit hierin davon die Rede ist, dass eine Achse oder Richtung zumindest mit einer Komponente in y-Richtung verläuft, gilt dieser Absatz entsprechend, d.h. es kann auch vorgesehen sein, dass die Achse bzw. Richtung zumindest im Wesentlichen parallel zur y-Richtung verläuft.

Gemäß einer vorteilhaften Weiterbildung ist vorgesehen, dass die Führungsschiene gegen die Anlagefläche befestigt ist. Dies erlaubt eine einfache Montage und Demontage der Führungsschiene.

Mit Vorteil kann es vorgesehen sein, dass die Führungsschiene in einer Befestigungsrichtung an der Führungsbahn befestigt ist, wobei die Befestigungsrichtung zumindest im Wesentlichen parallel zur y-Richtung ist. Die Befestigung kann somit bevorzugt "von vorne" erfolgen. Dies erlaubt eine einfache Montage und Demontage der Führungsschiene.

Bei einem Ausführungsbeispiel ist eine Befestigungseinrichtung für die Führungsschiene vorgesehen, wobei die Befestigungseinrichtung eine Befestigungskraft mit einer Komponente in y-Richtung, insbesondere zumindest im Wesentlichen parallel zur y-Richtung, ausübt.

Die Führungsschiene kann z.B. mittels ein oder bevorzugt mehrerer Befestigungselemente, z.B. Schrauben, und/oder Befestigungsausnehmungen, z.B. Gewinde, an einem Bauteil der Führungsbahn, insbesondere gegen die Anlagefläche, befestigt sein.

Beispielsweise kann es vorgesehen sein, dass die Führungsschiene mittels eines Befestigungselements, insbesondere einer Schraube, an der Führungsbahn befestigt ist, welches mit einer Komponente in y-Richtung, insbesondere zumindest im Wesentlichen parallel zur y-Richtung, wirksam ist und/oder welches mit einer Komponente in y-Richtung, insbesondere zumindest im Wesentlichen parallel zur y-Richtung, in eine Befestigungsausnehmung, insbesondere mit Innengewinde, eingebracht ist und/oder eingreift.

Eine Befestigungsausnehmung, z.B. mit Innengewinde für eine Schraube, kann bevorzugt in der Anlagefläche der Führungsbahn ausgebildet sein.

Es ist aber alternativ oder zusätzlich auch möglich, dass eine Befestigungsausnehmung durch ein separates Element gebildet ist. So kann etwa eine Schraube zusammen mit einer Mutter und/oder einem Nutenstein eine Befestigung der Führungsschiene bewirken. Im Fall des Nutensteins umfasst die Führungsbahn bevorzugt eine Nut zur Befestigung mittels Schraube und Nutenstein. Die Nut kann bevorzugt in der Anlagefläche ausgebildet sein.

Erfindungsgemäß umfasst die Führungsbahn mehrere Segmente. Die Segmente erlauben eine flexible Formgebung für das Linearmotorsystem. Z.B. kann das Linearmotor im Wesentlichen beliebig lang ausgebildet werden, indem einfach beliebig viele Segmente zum Aufbau der Führungsbahn verwendet werden. Segmente können z.B. in standardisierter Form angeboten werden, sodass sich die Segmente kostengünstig herstellen lassen, aber dennoch ein individueller Aufbau des Linearmotorsystems gewährleistet ist. Außerdem vereinfacht der segmentierte Aufbau die Wartung des Linearmotorsystems, weil im Fehlerfall nur das betreffende Segment ausgetauscht oder zur Reparatur demontiert werden muss.

Ein jeweiliges Segment umfasst typischerweise einen Satz von Elektromagneten zum Antrieb des Läufers und bevorzugt eine Leistungselektronik für die Elektromagneten. Insbesondere kann ein Segment somit einen Linearmotor bilden oder umfassen.

Ein Segment kann z.B. auch einen Satz von Positionssensoren, z.B. Magnetsensoren, zur Ermittlung der Position des Läufers umfassen.

Bei einer Weiterbildung ist vorgesehen, dass sich die Führungsschiene oder ein Führungsschienenabschnitt über mehrere Segmente erstreckt. Die Führungsschiene erstreckt sich generell entlang der Führungsrichtung, welche typischerweise die x-Richtung bildet. Die Weiterbildung vereinfacht die Wartung des Linearmotorsystems. So kann die Führungsschiene insbesondere an ersten Segmenten befestigt bleiben, während sie von einem zweiten Segment zum Zwecke seiner Wartung gelöst wird. Dies erweist sich besonders bei einer langen Führungsschiene als vorteilhaft, die sich über eine Vielzahl von Segmenten erstreckt.

Generell ist eine Führungsschiene bevorzugt an mehreren oder allen Segmenten der Führungsbahn befestigt, über die sich die Führungsschiene erstreckt. Vorteilhafterweise weisen mehrere oder alle Segmente eine Anlagefläche für die Führungsschiene auf, gegen welche die Führungsschiene befestigt sein kann. Das gleiche gilt für einen Führungsschienenabschnitt.

Ein Führungsschienenabschnitt ist letztlich eine Art Segment der Führungsschiene, wird aber zu klaren Begriffstrennung als Abschnitt bezeichnet. Die Führungsschiene kann mehrere als separate Bauteile ausgeführte Abschnitte umfassen, die typischerweise in Führungsrichtung hintereinander angeordnet sind. Dies ist insbesondere dann vorteilhaft, wenn das Linearmotorsystem einen Kurvenführungsbereich und einen geraden Führungsbereich umfasst. Denn dann können separate Führungsschienenabschnitte separat voneinander entsprechend den Anforderungen in den verschiedenen Bereichen hergestellt werden. Ferner ist es grundsätzlich vorteilhaft, wenn Führungsschienenabschnitte möglichst lang im Verhältnis zur gesamten Führungsbahn sind oder (anders ausgedrückt) wenn es möglichst wenige Übergänge zwischen Führungsschienenabschnitten gibt, da Übergänge beim Überfahren durch Führungselemente Geräusche und Verschleiß verursachen. In dieser Hinsicht ist es also letztlich auch vorteilhaft, wenn sich ein Führungsschienenabschnitt - bei gegebener Zahl und Länge der Segmente der Führungsbahn - über möglichst viele Segmente hinweg erstreckt. Dies erweist sich aber bei Konstruktionen des Standes der Technik, bei denen die Führungsschiene in einer Befestigungsrichtung parallel zur z-Richtung befestigt ist, als nachteilig bei der Wartung, weil die Segmente nicht in z-Richtung zugänglich sind oder entnommen werden können, ohne die Führungsschiene zu demontieren. Es versteht sich, dass die Demontage einer möglichst langen Führungsschiene tendenziell aufwendig ist. Außerdem kommt im Stand der Technik meist noch die erneute Ausrichtung der Führungsschiene hinzu. Die vorliegende Lehre erlaubt hingegen insbesondere, dass Segmente trotz montierter Führungsschiene einzeln in z-Richtung entnommen werden können. Typischerweise ist lediglich ein Lösen von Befestigungselementen - insbesondere in y-Richtung - nötig, welche die Führungsschiene am betreffenden Segment befestigen. Die Führungsschiene kann aber an benachbarten oder weiteren Segmenten befestigt bleiben. Somit muss die Führungsschiene auch nach Einsetzen eines neuen oder gewarteten Segments nicht erneut ausgerichtet werden.

Dadurch, dass bei befestigter Führungsschiene ein Element eines Segments der Führungsbahn, an welchem Element die Führungsschiene befestigt ist, und/oder ein Segment der Führungsbahn zumindest im Wesentlichen parallel zur z-Richtung zugänglich und entnehmbar ist, wird die Wartung der Führungsbahn erleichtert. Das Element bzw. das Segment ist einschließlich des Magneten der Führungsbahn entnehmbar.

Die Führungsbahn bzw. ein Segment umfasst typischerweise ein Element, welches die Position der Führungsschiene relativ zur Position des Magneten der Führungsbahn definiert. An diesem Element sind sowohl die Führungsschiene als auch der Magnet der Führungsbahn befestigt. Das Element kann grundsätzlich mehrteilig ausgebildet sein, wobei die mehreren Teile aber zur Festlegung der Relativposition fest miteinander verbunden sind. Das Element kann den Magneten der Führungsbahn z.B. in einer Richtung senkrecht zur y-Richtung bzw. parallel zur z-Richtung wenigstens einseitig, bevorzugt beidseitig, einfassen.

Bei einer Weiterbildung ist vorgesehen, dass die Führungsbahn, insbesondere ein jeweiliges Segment der Führungsbahn, ein Elektronikgehäuse umfasst. Im Elektronikgehäuse können z.B. Elektronikkomponenten zum Betreiben des Linearmotorsystems, insbesondere Platinen und/oder eine Leistungselektronik für den Antrieb des Läufers über die Magneten der Führungsbahn, angeordnet sein.

Bei einer weiteren Ausführungsform ist vorgesehen, dass die Führungsschiene das Bauteil, an welchem sie befestigt ist, insbesondere das Segment und/oder das Element, in wenigstens einer Richtung parallel zur z-Richtung frei lässt und/oder nicht begrenzt. Hierdurch ist es auf einfache Weise ermöglicht, dass das Bauteil, Segment bzw. Element in z-Richtung herausgenommen werden kann, ohne die Führungsschiene gänzlich zu demontieren. Die Führungsschiene befindet sich bevorzugt nur außerhalb der Projektion des Bauteils, des Segments und/oder des Elements parallel zur z-Richtung. Bevorzugt kann die Führungsschiene das Bauteil, Segment oder Element in zwei Richtungen parallel zur z-Richtung frei lassen und/oder nicht begrenzen. Somit lässt sich das Bauteil, Element oder Segment - bei vertikaler z-Richtung - sowohl nach oben als auch nach unten entnehmen. Die Führungsschiene kann beispielsweise eine Anlagefläche zur Anlage an der Anlagefläche der Führungsbahn und eine Führungsfläche zur Anlage des Führungselements eines Läufers an der Führungsschiene umfassen.

Bei einer Ausführungsform ist vorgesehen, dass die Anlagefläche der Führungsschiene und die Führungsfläche einstückig miteinander verbunden sind. Dies erlaubt eine einfache Herstellung und präzise Ausrichtung des geführten Führungselements.

Eine Alternative Ausführungsform sieht vor, dass die Anlagefläche der Führungsschiene und die Führungsfläche von separaten Bauteilen gebildet sind. Hierdurch lässt sich die Führungsfläche leichter bedarfsgerecht gestalten. So kann beispielsweise ein Material für die Führungsfläche zum Einsatz kommen, welches einen geringen Verschleiß im Führungssystem bewirkt. Bevorzugt können beispielsweise auch für Führungsfläche und Anlagefläche der Führungsschiene unterschiedliche Materialen zum Einsatz kommen. Dies erlaubt eine besonders bedarfsgerechte Gestaltung.

Grundsätzlich kann eine Führungsschiene bevorzugt Aluminium als Material umfassen. Wenn die Führungsfläche von einem anderen Material gebildet ist, als die Anlagefläche der Führungsschiene, kann die Anlagefläche der Führungsschiene bevorzugt von Aluminium gebildet sein. Eine Führungsschiene oder ein Bauteil der Führungsschiene aus Aluminium kann beispielsweise auf einfache Weise durch Strangpressen hergestellt werden.

Der Magnet des Läufers kann z.B. zumindest im Wesentlichen parallel zur y-Richtung an den Magneten der Führungsbahn angezogen werden. Insbesondere kann so der Läufer an der Führungsbahn gehalten werden.

Der Magnet des Läufers kann beispielsweise als Permanentmagnet ausgebildet sein. Der Läufer kann beispielsweise auch mehrere Magneten, z.B. Permanentmagneten, umfassen. Die mehreren Magneten können jeweils als Halte- und/oder Antriebsmagnet ausgebildet sein. Die mehreren Magneten können beispielsweise auch gemeinsam eine Magneteinheit und/oder einen Satz von Magneten bilden.

Generell können Läufer und/oder Führungsbahn bevorzugt mehrere Magneten zum Antrieb eines Läufers entlang der Führungsbahn und/oder zum Halten eines Läufers an der Führungsbahn aufweisen.

Bevorzugt sind an der Führungsbahn eine Vielzahl an Magneten entlang der Führungsbahn verteilt angeordnet. Auch ein Segment kann beispielsweise eine Mehrzahl an Magneten aufweisen. Die Zahl der Magneten ergibt sich insbesondere in Abhängigkeit von der Länge der Führungsbahn bzw. des Segments. Die Führungsbahn umfasst bevorzugt eine Reihe von Magneten, welche sich entlang der Führungsrichtung bzw. in x-Richtung erstreckt.

Der wenigstens eine Magnet der Führungsbahn bzw. des Segments kann insbesondere ein Elektromagnet sein. Dieser kann z.B. auch einen Permanentmagneten umfassen, z.B. zum Halten des Läufers an der Führungsbahn, insbesondere im stromlosen Zustand. Grundsätzlich kann ein Permanentmagnet aber auch separat vom Elektromagneten vorgesehen sein.

Mit weiterem Vorteil kann das Linearmotorsystem zum Beispiel mehrere, insbesondere unabhängig voneinander bewegbare, Läufer umfassen.

Der Läufer umfasst wenigstens ein Führungselement. Dieses kann bevorzugt als Führungsrolle ausgeführt sein.

Die Aufgaben der Erfindung werden auch durch ein Verfahren nach Anspruch 12 gelöst. Das Verfahren dient der Montage, Demontage oder Wartung eines Linearmotorsystems nach vorstehend beschriebener Art, wobei das Verfahren die Schritte umfasst: Lösen der Führungsschiene von der Führungsbahn in einer Richtung mit einer Komponente in y-Richtung, insbesondere zumindest im Wesentlichen parallel zur y-Richtung, und/oder Befestigen der Führungsschiene an der Führungsbahn in einer Befestigungsrichtung mit einer Komponente in y-Richtung, insbesondere zumindest im Wesentlichen parallel zur y-Richtung.

Das Lösen erfolgt bevorzugt von der Anlagefläche. Das Befestigen erfolgt bevorzugt gegen die Anlagefläche.

Die Führungsbahn umfasst mehrere Segmente. Das Verfahren umfasst wenigstens einen der Schritte: Entfernen eines Segments und/oder eines Elements zumindest im Wesentlichen parallel zur z-Richtung; und/oder Einbringen eines Segments und/oder eines Elements zumindest im Wesentlichen parallel zur z-Richtung. Das Entfernen des Segments und/oder das Einbringen des Segments erfolgen bevorzugt nach dem Lösen der Führungsschiene. Das Einbringen eines Segments erfolgt bevorzugt nach dem Entfernen des Segments.

Die Führungsschiene kann somit während des Entfernens und/oder des Einbringens des Segments an mehreren weiteren Segmenten, befestigt bleiben.

Es versteht sich, dass die hierin beschriebenen Verfahren auch im Sinne der in Bezug auf die Vorrichtungen, also insbesondere Linearmotorsystem, Transportsystem und/oder Läufer, beschriebenen Einzelmerkmale und Ausführungsformen weitergebildet werden kann. Dies gilt auch umgekehrt und zwischen verschiedenen Verfahren und Vorrichtungen.

Die Erfindung wird nachfolgend lediglich beispielhaft anhand der schematischen Zeichnungen erläutert.
- Fig. 1: zeigt ein als Transportsystem ausgebildetes Linearmotorsystem des Standes der Technik.
- Fig. 2: zeigt einen Kurvenabschnitt des Transportsystems der Fig. 1.
- Fig. 3: zeigt eine geschnittene perspektivische Darstellung des Transportsystems der Fig. 1 mit Schnittebene senkrecht zu einer Führungsbahn.
- Fig. 4: zeigt ein erfindungsgemäßes Linearmotorsystem in einer Schnittansicht.
- Fig. 5: zeigt das Linearmotorsystems der Fig. 4 in einer Draufsicht.

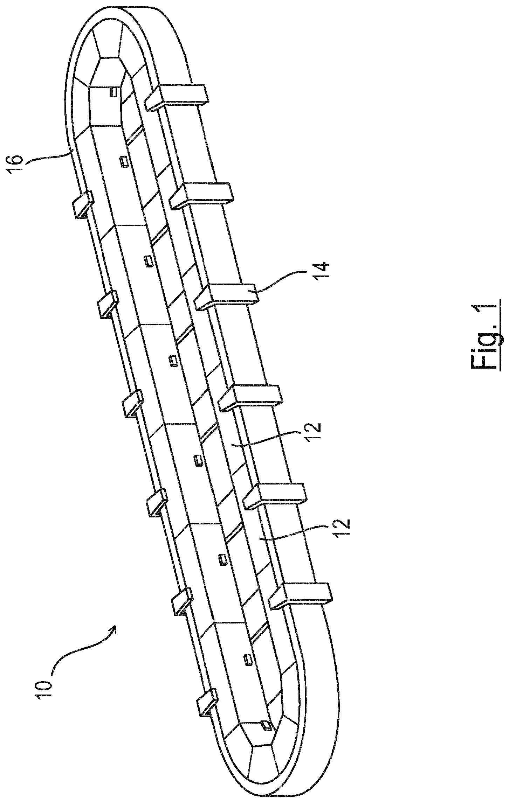

Ein Transportsystem 10, das als Multi-Carrier-System ausgebildet ist, ist in Fig. 1 dargestellt. Das Transportsystem 10 umfasst mehrere, als Linearmotoren ausgebildete Segmente 12, die aneinandergereiht angeordnet sind und von denen aus Gründen der Übersichtlichkeit hier nur zwei referenziert sind. Das Transportsystem 10 umfasst außerdem mehrere Läufer 14. Die Segmente 12 bilden gemeinsam eine Führungsbahn 16, entlang derer die Läufer 14 geführt bewegbar sind, insbesondere unabhängig voneinander.

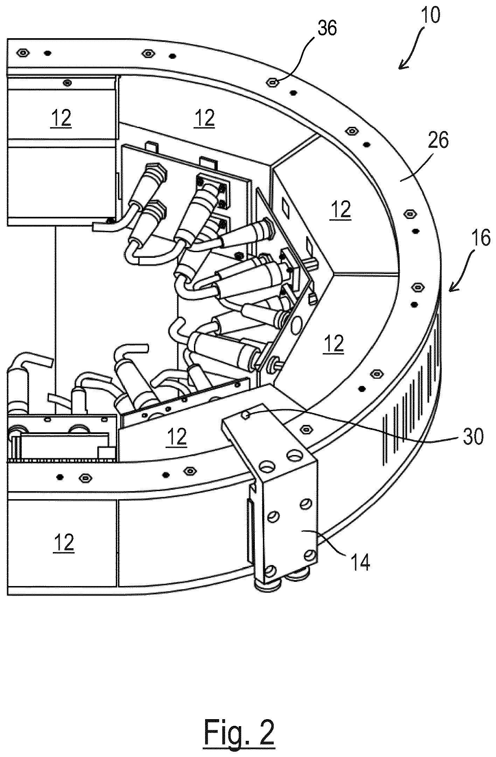

Fig. 2 zeigt einen Kurvenabschnitt des Transportsystems 10 in vergrößerter Ansicht. Hier ist lediglich einer der in Fig. 1 mehreren Läufer 14 dargestellt. Der Läufer 14 ist entlang der Führungsbahn 16 bewegbar, nämlich über die Linearmotoren der Segmente 12. Auf der dem Läufer 14 abgewandten Seite der Führungsbahn 16, also innerhalb der Kurve, sind verschiedene elektronische Einrichtungen, insbesondere Anschlüsse, zur Ansteuerung der Linearmotoren 12 sichtbar.

In Fig. 3 ist das Transportsystem 10 geschnitten und vergrößert dargestellt. Es ist ein Läufer 14 sichtbar, der an der Führungsbahn 16 beweglich geführt ist. Dabei ist der Läufer 14 entlang einer Führungsachse 18 oder Bewegungsachse bewegbar. Zu einer Bewegung entlang der Führungsachse 18 wird der Läufer 14 durch eine Vielzahl von Elektromagneten 20 angesteuert, die an der Führungsbahn 16 angeordnet und entlang dieser gleichmäßig verteilt sind. Die Elektromagneten 20 wirken dabei mit einem am Läufer 14 angeordneten Permanentmagneten 22, der auch als Antriebsmagnet bezeichnet werden kann, zum Antrieb des Läufers 14 entlang der Führungsachse 18 zusammen.

Der Läufer 14 ist an der Führungsbahn 16 mechanisch geführt, hier durch eine Rollenführung. Der Läufer 14 umfasst Führungselemente 24, welche als Führungsrollen ausgebildet sind. Die Führungsbahn 16 umfasst Führungsschienen 26. Der Läufer 14 wird dabei insbesondere über den Permanentmagneten 22 an der Führungsbahn 16 gehalten.

Das Transportsystem 10 umfasst außerdem eine Positionserfassungseinrichtung 28. Diese kann zum Beispiel als Reihe von einer Vielzahl von Magnetsensoren ausgebildet sein, die sich entlang der Führungsbahn 16 erstreckt. Am Läufer 14 kann zum Beispiel ein Permanentmagnet 30 vorgesehen sein, der auch als Positionsmagnet bezeichnet werden kann und in Fig. 2 sichtbar ist.

Das Transportsystem 10 umfasst ferner eine nicht separat dargestellte Steuerungseinrichtung, die dazu eingerichtet ist, die Elektromagneten 20 gezielt anzusteuern, um den Läufer 14 entlang der Führungsbahn 16 bzw. der Führungsachse 18 zu bewegen. Die Positionserfassungseinrichtung 28 führt dabei eine Positionsinformation betreffend die Position des Läufers 14 in Bezug auf die Führungsachse 18 zurück zur Steuerungseinrichtung. Die Steuerungseinrichtung regelt die Bewegung des Läufers 14 auf Basis der Positionsinformation.

In Fig. 3 ist ein Koordinatensystem mit x-, y-, und z-Richtungen eingezeichnet. Die x-Richtung verläuft parallel zur Führungsachse 18. Die y-Richtung verläuft senkrecht zur x-Richtung und parallel zu einem Abstand zwischen den Magneten 20 und 22 sowie parallel zu der Richtung, in der der Permanentmagnet 22 an den Elektromagneten 20 angezogen wird. Die z-Richtung verläuft senkrecht zur x-Richtung und zur y-Richtung.

In Fig. 3 ist ein Segment 12.1 der Führungsbahn 16 geschnitten dargestellt. Die Schnittebene liegt in der yz-Ebene. Es ist außerdem eine zweites Segment 12.2 teilweise sichtbar, welches an einer Stoßkante 32 am ersten Segment 12.1 anliegt.

Die Führungsschienen 26 sind an einem Element 34 des jeweiligen Segments 12 befestigt. An der in Fig. 3 unteren Führungsschiene 26 sind mehrere Schrauben 36 sichtbar, mittels derer die Führungsschiene 26 an dem Element 34 befestigt ist.

Da der Abstand der Magneten 20 und 22 zueinander bzw. die Position des Läufers 14 in y-Richtung möglichst genau einem vorgegebenen Wert entsprechen soll, muss die Führungsschiene in Bezug auf die y-Richtung ausgerichtet werden. Dies erfolgt zum Beispiel über Zylinderstifte, für die hier mehrere Ausnehmungen 38 angedeutet sind.

Die in Fig. 3 untere Führungsschiene 26 ist gegen eine Anlagefläche 40 des betreffenden Segments 12 befestigt, die senkrecht zur z-Richtung verläuft, deren Normale also - anders als bei dem erfindungsgemäßen Linearmotorsystem - parallel zur z-Richtung verläuft.

Die in Fig. 3 obere Führungsschiene 26 ist in ähnlicher Weise am Element 34 befestigt. Entsprechende Schrauben 36 sind in Fig. 2 angedeutet.

Wie ebenfalls aus Fig. 3 hervorgeht, erstrecken sich die Führungsschienen 26 über mehrere Segmente 12 hinweg, nämlich wenigstens über die Segmente 12.1 und 12.2. Wenn ein Segment 12 zwecks Wartung demontiert werden soll, so muss wenigstens eine der beiden Führungsschienen 26 vorher vollständig demontiert werden, um das betreffende Segment 12 in z-Richtung aus der Reihe von Segmenten 12 bzw. der Führungsbahn 16 entnehmen zu können.

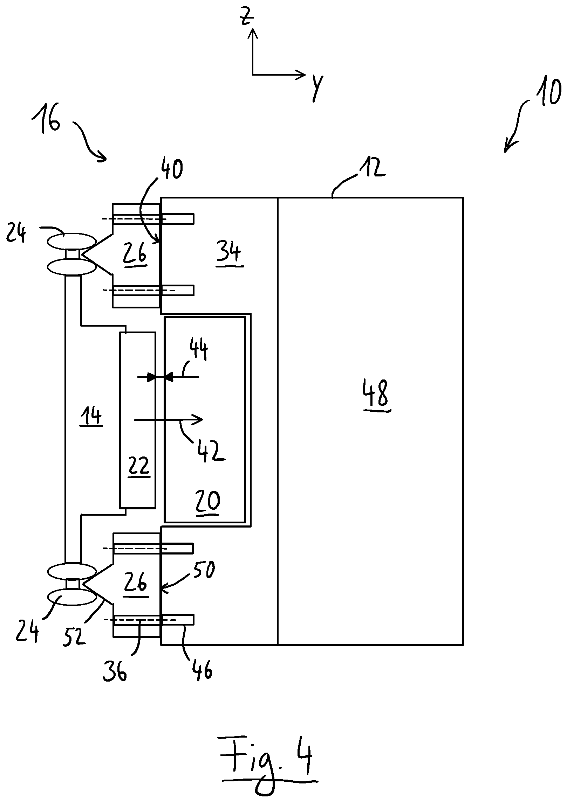

In Fig. 4 ist ein erfindungsgemäßes Linearmotorsystem 10 gezeigt, welches bevorzugt grundsätzlich ähnlich dem Linearmotorsystem 10 der Fig. 1 bis 3 aufgebaut sein kann. Das Linearmotorsystem 10 der Fig. 4 umfasst ein Segment 12 einer Führungsbahn 16, welches in Fig. 4 geschnitten dargestellt ist, wobei die Schnittebene parallel zur yz-Ebene verläuft.

Es ist ein Läufer 14 mit einem Permanent- bzw. Antriebsmagneten 22 sichtbar. Das Segment 12 umfasst einen Elektromagneten 20. Der Elektromagnet 20 bewirkt eine Anziehungskraft 42 auf den Antriebsmagneten 22. Im Elektromagnet 20 ist ein Permanentmagnet integriert, sodass der Läufer 14 an der Führungsbahn 16 auch im stromlosen Zustand des Elektromagneten 20 gehalten wird.

Der Elektromagnet 20 wird im Betrieb des Linearmotorsystems 10 dazu angesteuert, den Antriebsmagneten 22 zusammen mit dem Läufer 14 in einer x-Richtung zu bewegen, die in Fig. 4 senkrecht zur Bildebene verläuft. Der Läufer 14 ist zu diesem Zweck an der Führungsbahn 16 geführt, nämlich durch Führungsschienen 26, welche an der Führungsbahn 16 vorgesehen sind und mit Führungselementen 24 des Läufers 14 zu dessen Führung zusammenwirken.

Eine jeweilige Führungsschiene 26 liegt an einer Anlagefläche 40 der Führungsbahn 16 bzw. des Segments 12 an und ist gegen diese Anlagefläche 40 an der Führungsbahn 16 befestigt. Die Normale der Anlagefläche 40 verläuft zumindest im Wesentlichen parallel zur y-Richtung.

Die Anlagefläche 40 bewirkt eine Ausrichtung der Führungsschiene 26 in y-Richtung ohne zusätzliche Ausrichtungsmittel, wie etwa Zylinderstifte. Vielmehr werden die Führungsschienen 26 gewissermaßen automatisch durch Befestigung in Anlage mit der Anlagefläche 40 in Bezug auf die y-Richtungen ausgerichtet. Dies bewirkt, dass die Montage der Führungsschienen 26 vereinfacht ist, wobei allerdings ein vorgegebener Abstand 44 zwischen den Magneten 20 und 22 dennoch präzise eingehalten werden kann.

Eine jeweilige Führungsschiene 26 ist an der Führungsbahn 16 durch Schrauben 36 befestigt, die hier zwecks Übersichtlichkeit lediglich als gestrichelte Linie angedeutet sind. Eine jeweilige Schraube 36 greift in eine Befestigungsausnehmung 46 ein, welche in der Anlagefläche 40 vorgesehen ist, und wirkt mit einem in der Befestigungsausnehmung 46 vorgesehenen Innengewinde zur Befestigung der Führungsschiene 26 zusammen. Die Schraube 36 bewirkt somit eine Befestigungskraft, welche parallel zur y-Richtung verläuft.

Die Führungsbahn 16 bzw. das Segment 12 umfasst ein Element 34, an welchem die Führungsschienen 26 und der Elektromagnet 20 befestigt sind. Das Element 34 definiert also die Position des Elektromagneten 20 relativ zur Anlagefläche 40. Das Element 34 ist in dieser Ausführungsform so ausgestaltet, dass es den Elektromagneten 20 in Bezug auf die z-Richtung einfasst.

Die Führungsbahn 16 bzw. das Segment 12 umfasst ferner ein Elektronikgehäuse 48, in welchem zum Beispiel eine Leistungselektronik zum Betreiben des Elektromagneten 20 vorgesehen sein kann. Auch weitere elektronische Komponenten, wie etwa eine Sensoranordnung eines Positionserfassungssystems, können im Elektronikgehäuse 48 angeordnet sein.

Eine jeweilige Führungsschiene 26 umfasst eine Anlagefläche 50, mit der die Führungsschiene 26 an der Anlagefläche 40 der Führungsbahn 16 bzw. des Elements 34 anliegt. Die Führungsschiene 26 umfasst außerdem eine Führungsfläche 52 zur Anlage des Führungselements 24 des Läufers 14 an der Führungsschiene 26. Die Anlagefläche 50 der Führungsschiene 26 und die Führungsfläche 52 sind in dieser Ausführungsform einstückig miteinander verbunden. Alternativ können Sie beispielsweise auch von separaten Bauteilen gebildet sein, welche bevorzugt unterschiedliche Materialen umfassen.

Wie es etwa anhand von Fig. 4 ersichtlich ist, ist die Führungsbahn 16 bzw. das Segment 12 parallel zur z-Richtung zugänglich und das Segment 12 lässt sich nach Lösen der Schrauben 36 parallel zur z-Richtung aus der Reihe von Segmenten 12 entfernen. Beim Entfernen wird das Segment 12 bevorzugt als Ganzes einschließlich des Magneten 20, des Elements 34 sowie des Elektronikgehäuses 48 parallel zur z-Richtung entnommen. Die Führungsschienen 26 lassen das Segment 12 bzw. das Element 34 in einer Richtung parallel zur z-Richtung frei bzw. begrenzen diese nicht.

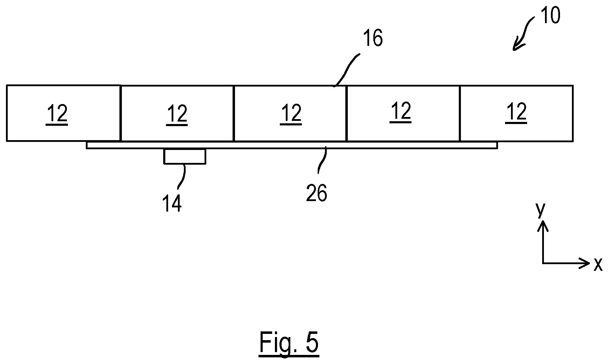

In Fig. 5 ist das Linearmotorsystem 10 der Fig. 4 in einer Draufsicht dargestellt.

Das Linearmotorsystem 10 ist hier nur teilweise dargestellt, kann aber bevorzugt als geschlossene Bahn ausgebildet sein, ähnlich der Darstellung in Fig. 1.

In Fig. 5 sind fünf Segmente 12 der Führungsbahn 16 dargestellt. Ein Abschnitt der Führungsbahn 26 erstreckt sich über mehrere Segmente 12 hinweg. Es ist ferner ein Läufer 14 dargestellt, der parallel zur x-Richtung geführt bewegbar ist. Eine z-Richtung verläuft hier senkrecht zur Bildebene.

Wenn eines der Segmente 12 zwecks Wartung aus der Führungsbahn 16 parallel zur z-Richtung entnommen werden soll, so kann die Führungsschiene 26 an den übrigen Segmenten 12 befestigt bleiben. Somit ist weder eine Demontage der Führungsschiene 26 noch ein Abnehmen des Läufers 14 von der Führungsbahn 16 nötig. Vielmehr brauchen lediglich die Schrauben 36, welche die Führungsschiene 26 mit dem zu entnehmenden Segment 12 verbinden, gelöst werden. Entsprechendes gilt für das Einbringen eines neuen oder gewarteten Segments 12. So kann ein Segment 12 an einer Leerstelle parallel zur z-Richtung eingebracht werden und anschließend können Schrauben 36, welche die Führungsschiene 26 mit dem betreffenden Segment verbinden, angebracht werden. Die gezeigte Konstruktion erlaubt somit eine besonders einfache Wartung des Linearmotorsystems 10.

Grundsätzlich ist es, insbesondere bei geraden Segmenten, zusätzlich auch möglich, diese parallel zur y-Richtung zu entnehmen bzw. einzubringen. So können mit Bezug auf Fig. 5 die Segmente 12 in positiver y-Richtung entnommen bzw. in negativer y-Richtung wieder in die Führungsbahn 16 eingebracht werden, ohne die Führungsschiene 26 zu demontieren. Dies erlaubt ebenfalls eine einfache Wartung.

### Bezugszeichenliste

- 10: Transportsystem/Linearmotorsystem
- 12: Segment
- 14: Läufer
- 16: Führungsbahn
- 18: Führungsachse
- 20: Elektromagnet
- 22: Antriebsmagnet
- 24: Führungselement
- 26: Führungsschiene
- 28: Positionserfassungseinrichtung
- 30: Positionsmagnet
- 32: Stoßkante
- 34: Element
- 36: Schraube
- 38: Ausnehmung
- 40: Anlagefläche
- 42: Anziehungskraft
- 44: Abstand
- 46: Befestigungsausnehmung
- 48: Elektronikgehäuse
- 50: Anlagefläche
- 52: Führungsfläche

## Patentansprüche

1. Linearmotorsystem (10), insbesondere Transportsystem, z.B. Multicarrier, mit wenigstens einem Läufer (14),
mit einer mehrere Segmente (12) umfassenden Führungsbahn (16) für den Läufer (14),
einer an der Führungsbahn (16) angeordneten Führungsschiene (26) und einem an dem Läufer (14) angeordneten Führungselement (24),
wobei die Führungsschiene (26) und das Führungselement (24) zur Führung des Läufers (14) an der Führungsbahn (16) zusammenwirken,
wobei am Läufer (14) ein Magnet (22) und an der Führungsbahn (16) ein Magnet (20) zum Antrieb des Läufers (14) entlang der Führungsbahn (16) und/oder zum Halten des Läufers (14) an der Führungsbahn (26) vorgesehen sind,
wobei eine y-Richtung parallel zu einem Abstand (44) zwischen den Magneten (20, 22) verläuft und senkrecht zur y-Richtung eine z-Richtung definiert ist,
und wobei die Führungsbahn (16) eine Anlagefläche (40) umfasst, an der die Führungsschiene (26) anliegt, und wobei eine Normale der Anlagefläche (40) zumindest mit einer Komponente parallel zur y-Richtung verläuft, **dadurch gekennzeichnet, dass** ein Element (34) eines Segments (12) der Führungsbahn (16), an welchem Element (34) die Führungsschiene (26) und der Magnet (20) der Führungsbahn (16) befestigt sind, und/oder ein Segment (12) der Führungsbahn (16) einschließlich des Magneten (20) zumindest im Wesentlichen parallel zur z-Richtung zugänglich und
entnehmbar ist, während die Führungsschiene (26) an weiteren Segmenten (12) befestigt bleibt.

2. Linearmotorsystem (10) nach Anspruch 1,
wobei eine y-Komponente der Normalen der Anlagefläche (40) größer ist als Komponenten der Normalen in zur y-Richtung senkrechten Richtungen.

3. Linearmotorsystem (10) nach Anspruch 1 oder 2,
wobei die Normale der Anlagefläche (40) zumindest im Wesentlichen parallel zur y-Richtung ist.

4. Linearmotorsystem (10) nach einem der vorstehenden Ansprüche,
wobei die Führungsschiene (26) gegen die Anlagefläche (40) befestigt ist und/oder
wobei die Führungsschiene (26) in einer Befestigungsrichtung an der Führungsbahn (16) befestigt ist, wobei die Befestigungsrichtung zumindest im Wesentlichen parallel zur y-Richtung ist.

5. Linearmotorsystem (10) nach einem der vorstehenden Ansprüche,
wobei eine Befestigungseinrichtung (36) für die Führungsschiene (26) eine Befestigungskraft mit einer Komponente in y-Richtung, insbesondere zumindest im Wesentlichen parallel zur y-Richtung, ausübt.

6. Linearmotorsystem (10) nach einem der vorstehenden Ansprüche,
wobei die Führungsschiene (26) mittels eines Befestigungselements, insbesondere einer Schraube (36), an der Führungsbahn (16) befestigt ist, welches mit einer Komponente in y-Richtung, insbesondere zumindest im Wesentlichen parallel zur y-Richtung, wirksam ist und/oder welches mit einer Komponente in y-Richtung, insbesondere zumindest im Wesentlichen parallel zur y-Richtung, in eine Befestigungsausnehmung (46), insbesondere mit Innengewinde, eingebracht ist und/oder eingreift.

7. Linearmotorsystem (10) nach einem der vorstehenden Ansprüche,
wobei sich die Führungsschiene (26) oder ein Führungsschienenabschnitt über mehrere Segmente (12) erstreckt.

8. Linearmotorsystem (10) nach einem der vorstehenden Ansprüche,
wobei die Führungsschiene (26) das Bauteil, an welchem sie befestigt ist, insbesondere das Segment (12) und/oder das Element (34), in wenigstens einer Richtung parallel zur z-Richtung frei lässt und/oder nicht begrenzt.

9. Linearmotorsystem (10) nach einem der vorstehenden Ansprüche,
wobei die Führungsschiene (26) eine Anlagefläche (50) zur Anlage an der Anlagefläche (40) der Führungsbahn (16) und eine Führungsfläche (52) zur Anlage des Führungselements (24) eines Läufers (14) an der Führungsschiene (26) umfasst, und wobei die Anlagefläche (50) der Führungsschiene (26) und die Führungsfläche (52) einstückig miteinander verbunden sind.

10. Linearmotorsystem (10) nach einem der vorstehenden Ansprüche,
wobei die Führungsschiene (26) eine Anlagefläche (50) zur Anlage an der Anlagefläche (40) der Führungsbahn (16) und eine Führungsfläche (52) zur Anlage des Führungselements (24) eines Läufers (14) an der Führungsschiene (26) umfasst, und wobei die Anlagefläche (50) der Führungsschiene (26) und die Führungsfläche (52) von separaten Bauteilen gebildet sind, welche bevorzugt unterschiedliche Materialen umfassen.

11. Linearmotorsystem (10) nach einem der vorstehenden Ansprüche,
wobei der Magnet (22) des Läufers (14) in einer Richtung mit einer Komponente in y-Richtung, insbesondere zumindest im Wesentlichen parallel zur y-Richtung, an den Magneten (20) der Führungsbahn (16) angezogen und so der Läufer (14) an der Führungsbahn (16) gehalten wird.

12. Verfahren zur Montage, Demontage oder Wartung eines Linearmotorsystems (10) nach einem der vorstehenden Ansprüche,
wobei das Verfahren die Schritte umfasst:
Lösen der Führungsschiene (26) von der Führungsbahn (16) in einer Richtung mit einer Komponente in y-Richtung und/oder
Befestigen der Führungsschiene (26) an der Führungsbahn (16) in einer Befestigungsrichtung mit einer Komponente in y-Richtung und
Entfernen eines Elements und/oder eines Segments (12) zumindest im Wesentlichen parallel zur z-Richtung und/oder
Einbringen eines Elements und/oder eines Segments (12) zumindest im Wesentlichen parallel zur z-Richtung.

## Claims

1. A linear motor system (10), in particular a transport system, e.g. a multi-carrier,
having at least one carrier (14),
having a guide track (16), which comprises a plurality of segments (12), for the carrier (14),
having a guide rail (26) arranged at the guide track (16), and
having a guide element (24) arranged at the carrier (14),
wherein the guide rail (26) and the guide element (24) cooperate to guide the carrier (14) at the guide track (16),
wherein a magnet (22) is provided at the carrier (14) and a magnet (20) is provided at the guide track (16) for driving the carrier (14) along the guide track (16) and/or for holding the carrier (14) at the guide track (26),
wherein a y direction extends in parallel with a spacing (44) between the magnets (20, 22) and a z direction is defined perpendicular to the y direction,
and wherein the guide track (16) comprises a contact surface (40) which the guide rail (26) contacts, and wherein a normal of the contact surface (40) extends with at least one component in parallel with the y direction,
**characterized in that** an element (34) of a segment (12) of the guide track (16), to which element (34) the guide rail (26) and the magnet (20) of the guide track (16) are fastened, and/or a segment (12) of the guide track (16), including the magnet (20), is/are accessible and removable at least substantially in parallel with the z direction while the guide rail (26) remains fastened to further segments (12).

2. A linear motor system (10) in accordance with claim 1,
wherein a y component of the normal of the contact surface (40) is greater than components of the normal in directions perpendicular to the y direction.

3. A linear motor system (10) in accordance with claim 1 or claim 2,
wherein the normal of the contact surface (40) is at least substantially in parallel with the y direction.

4. A linear motor system (10) in accordance with any one of the preceding claims,
wherein the guide rail (26) is fastened against the contact surface (40), and/or
wherein the guide rail (26) is fastened to the guide track (16) in a fastening direction, wherein the fastening direction is at least substantially in parallel with the y direction.

5. A linear motor system (10) in accordance with any one of the preceding claims,
wherein a fastening device (36) for the guide rail (26) exerts a fastening force with a component in the y direction, in particular at least substantially in parallel with the y direction.

6. A linear motor system (10) in accordance with any one of the preceding claims,
wherein the guide rail (26) is fastened to the guide track (16) by means of a fastening element, in particular a screw (36), that is effective with a component in the y direction, in particular at least substantially in parallel with the y direction, and/or that is inserted and/or engages with a component in the y direction, in particular at least substantially in parallel with the y direction, into a fastening recess (46) which in particular has an internal thread.

7. A linear motor system (10) in accordance with any one of the preceding claims,
wherein the guide rail (26) or a guide rail section extends over a plurality of segments (12).

8. A linear motor system (10) in accordance with any one of the preceding claims,
wherein the guide rail (26) leaves free and/or does not bound the component to which it is fastened, in particular the segment (12) and/or the element (34), in at least one direction in parallel with the z direction.

9. A linear motor system (10) in accordance with any one of the preceding claims,
wherein the guide rail (26) comprises a contact surface (50) for contact with the contact surface (40) of the guide track (16) and a guide surface (52) for bringing the guide element (24) of a carrier (14) in contact with the guide rail (26), and wherein the contact surface (50) of the guide rail (26) and the guide surface (52) are connected in one piece with one another.

10. A linear motor system (10) in accordance with any one of the preceding claims,
wherein the guide rail (26) comprises a contact surface (50) for contact with the contact surface (40) of the guide track (16) and a guide surface (52) for bringing the guide element (24) of a carrier (14) in contact with the guide rail (26), and wherein the contact surface (50) of the guide rail (26) and the guide surface (52) are formed by separate components which preferably comprise different materials.

11. A linear motor system (10) in accordance with any one of the preceding claims,
wherein the magnet (22) of the carrier (14) is attracted to the magnets (20) of the guide track (16) in a direction with a component in the y direction, in particular at least substantially in parallel with the y direction, and the carrier (14) is held at the guide track (16) in this manner.

12. A method of assembling, dismantling or maintaining a linear motor system (10) in accordance with any one of the preceding claims,
wherein the method comprises the steps:
releasing the guide rail (26) from the guide track (16) in a direction with a component in the y direction and/or
fastening the guide rail (26) to the guide track (16) in a fastening direction with a component in the y direction and
removing an element and/or a segment (12) at least substantially in parallel with the z direction, and/or
inserting an element and/or a segment (12) at least substantially in parallel with the z direction.

## Revendications

1. Système de moteur linéaire (10), en particulier système de transport, par exemple un système Multi-chariot, comprenant
au moins un mobile (14),
une voie de guidage (16) comprenant plusieurs segments (12) pour le mobile (14),
un rail de guidage (26) disposé sur la voie de guidage (16) et
un élément de guidage (24) disposé sur le mobile (14),
dans lequel le rail de guidage (26) et l'élément de guidage (24) coopèrent pour guider le mobile (14) le long de la voie de guidage (16),
dans lequel un aimant (22) est prévu sur le mobile (14) et un aimant (20) est prévu sur la voie de guidage (16) pour entraîner le mobile (14) le long de la voie de guidage (16) et/ou pour maintenir le mobile (14) contre la voie de guidage (26),
dans lequel une direction y s'étend parallèlement à une distance (44) entre les aimants (20, 22) et une direction z est définie perpendiculairement à la direction y,
et dans lequel la voie de guidage (16) comprend une surface d'appui (40) contre laquelle s'appuie le rail de guidage (26), et dans lequel une normale à la surface d'appui (40) s'étend au moins avec une composante parallèle à la direction y,
**caractérisé en ce qu'**un élément (34) d'un segment (12) de la voie de guidage (16), élément (34) sur lequel sont fixés le rail de guidage (26) et l'aimant (20) de la voie de guidage (16), et/ou un segment (12) de la voie de guidage (16), y compris l'aimant (20), sont accessibles et amovibles au moins sensiblement parallèlement à la direction z, tandis que le rail de guidage (26) reste fixé à d'autres segments (12).

2. Système de moteur linéaire (10) selon la revendication 1,
dans lequel une composante y de la normale à la surface d'appui (40) est supérieure aux composantes de la normale dans des directions perpendiculaires à la direction y.

3. Système de moteur linéaire (10) selon la revendication 1 ou 2,
dans lequel la normale à la surface d'appui (40) est au moins sensiblement parallèle à la direction y.

4. Système de moteur linéaire (10) selon l'une des revendications précédentes,
dans lequel le rail de guidage (26) est fixé contre la surface d'appui (40) et/ou
le rail de guidage (26) est fixé à la voie de guidage (16) dans une direction de fixation, la direction de fixation étant au moins sensiblement parallèle à la direction y.

5. Système de moteur linéaire (10) selon l'une des revendications précédentes
dans lequel un dispositif de fixation (36) pour le rail de guidage (26) exerce une force de fixation dont une composante est orientée dans la direction y, en particulier au moins sensiblement parallèlement à la direction y.

6. Système de moteur linéaire (10) selon l'une des revendications précédentes,
dans lequel le rail de guidage (26) est fixé à la voie de guidage (16) au moyen d'un élément de fixation, en particulier d'une vis (36), qui agit avec une composante dans la direction y, en particulier au moins sensiblement parallèle à la direction y, et/ou qui est inséré et/ou s'engage avec une composante dans la direction y, en particulier au moins sensiblement parallèle à la direction y, dans un évidement de fixation (46), notamment pourvu d'un filetage intérieur.

7. Système de moteur linéaire (10) selon l'une des revendications précédentes,
dans lequel le rail de guidage (26) ou un tronçon de rail de guidage s'étend sur plusieurs segments (12).

8. Système de moteur linéaire (10) selon l'une des revendications précédentes,
dans lequel le rail de guidage (26) laisse libre et/ou ne limite pas le composant auquel il est fixé, en particulier le segment (12) et/ou l'élément (34), dans au moins une direction parallèle à la direction z.

9. Système de moteur linéaire (10) selon l'une des revendications précédentes,
dans lequel le rail de guidage (26) comprend une surface d'appui (50) destinée à venir en appui contre la surface d'appui (40) de la voie de guidage (16) et une surface de guidage (52) destinée à permettre à l'élément de guidage (24) d'un mobile (14) de venir en appui contre le rail de guidage (26), et dans lequel la surface d'appui (50) du rail de guidage (26) et la surface de guidage (52) sont reliées entre elles d'un seul tenant.

10. Système de moteur linéaire (10) selon l'une des revendications précédentes,
dans lequel le rail de guidage (26) comprend une surface d'appui (50) destinée à venir en appui contre la surface d'appui (40) de la voie de guidage (16) et une surface de guidage (52) destinée à l'appui de l'élément de guidage (24) d'un mobile (14) contre le rail de guidage (26), et dans lequel la surface d'appui (50) du rail de guidage (26) et la surface de guidage (52) sont formées par des composants distincts, qui sont de préférence constitués de matériaux différents.

11. Système de moteur linéaire (10) selon l'une des revendications précédentes,
dans lequel l'aimant (22) du mobile (14) est attiré vers l'aimant (20) de la voie de guidage (16) dans une direction présentant une composante dans la direction y, en particulier au moins sensiblement parallèlement à la direction y, et le mobile (14) est ainsi maintenu sur la voie de guidage (16).

12. Procédé de montage, de démontage ou de maintenance d'un système de moteur linéaire (10) selon l'une des revendications précédentes ;
le procédé comprenant les étapes suivantes :
le détachement du rail de guidage (26) de la voie de guidage (16) dans une direction présentant une composante dans la direction y et/ou la fixation du rail de guidage (26) sur la voie de guidage (16) dans une direction de fixation comportant une composante dans la direction y et
le retrait d'un élément et/ou d'un segment (12) au moins sensiblement parallèlement à la direction z, et/ou
l'insertion d'un élément et/ou d'un segment (12) au moins sensiblement parallèlement à la direction z.
